(19) **Europäisches Patentamt European Patent Office Office européen des brevets**

(11) **EP 3 572 865 B1**

(12) **EUROPEAN PATENT SPECIFICATION**

(45) Date of publication and mention of the grant of the patent:
**15.07.2020 Bulletin 2020/29**

(51) Int Cl.:
*G02F 1/01* (2006.01)   *G02B 5/18* (2006.01)
*G02B 5/30* (2006.01)   *G02B 27/28* (2006.01)

(21) Application number: **19176089.1**

(22) Date of filing: **23.05.2019**

(54) **APPARATUS FOR TWO-DIMENSIONAL PHOTONIC SIMULATION BY MEANS OF PANCHARATNAM-BERRY PHASE PLATES**

VORRICHTUNG ZUR ZWEIDIMENSIONALEN PHOTONISCHEN SIMULATION MITTELS PANCHARATNAM-BERRY-PHASE-PLATTEN

APPAREIL DE SIMULATION PHOTONIQUE BIDIMENSIONNELLE AU MOYEN DE PLAQUES DE PHASE PANCHARATNAM-BERRY

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2018 IT 201800005705**

(43) Date of publication of application:
**27.11.2019 Bulletin 2019/48**

(73) Proprietor: **Universita' degli Studi di Napoli "Federico II"**
**80138 Napoli (IT)**

(72) Inventors:
• **MARRUCCI, Lorenzo**
  **80122 NAPOLI (IT)**
• **CARDANO, Filippo**
  **82027 Pontelandolfo (Benevento) (IT)**
• **PICCIRILLO, Bruno**
  **80056 Ercolano (Napoli) (IT)**
• **D'ERRICO, Alessio**
  **80067 Sorrento (Napoli) (IT)**

(74) Representative: **Vanzini, Christian et al**
**Jacobacci & Partners S.p.A.**
**Corso Emilia 8**
**10152 Torino (IT)**

(56) References cited:
**US-A1- 2006 126 183    US-A1- 2006 224 547**
**US-A1- 2015 354 938    US-B1- 6 947 193**

• FILIPPO CARDANO ET AL: "Quantum walks and wavepacket dynamics on a lattice with twisted photons", SCIENCE, vol. 1, no. 2, 27 March 2015 (2015-03-27), page e1500087, XP055530397, ISSN: 0036-8075, DOI: 10.1126/sciadv.1500087
• SANDEEP K. GOYAL ET AL: "Implementing Quantum Walks Using Orbital Angular Momentum of Classical Light", PHYSICAL REVIEW LETTERS, vol. 110, no. 26, 7 July 2013 (2013-07-07) , XP055530401, US ISSN: 0031-9007, DOI: 10.1103/PhysRevLett.110.263602
• TAKUYA KITAGAWA ET AL: "Observation of topologically protected bound states in a one dimensional photonic system", ARXIV.ORG, CORNELL UNIVERSITY LIBRARY, 201 OLIN LIBRARY CORNELL UNIVERSITY ITHACA, NY 14853, 26 May 2011 (2011-05-26), XP080506325, DOI: 10.1038/NCOMMS1872
• PABLO ARNAULT ET AL: "Quantum walks and gravitational waves", ARXIV.ORG, CORNELL UNIVERSITY LIBRARY, 201 OLIN LIBRARY CORNELL UNIVERSITY ITHACA, NY 14853, 3 September 2016 (2016-09-03), XP080724414,
• BRUNO PICCIRILLO ET AL: "Photon spin-to-orbital angular momentum conversion via an electrically tunable q-plate", ARXIV.ORG, CORNELL UNIVERSITY LIBRARY, 201 OLIN LIBRARY CORNELL UNIVERSITY ITHACA, NY 14853, 21 October 2010 (2010-10-21), XP080458070, DOI: 10.1063/1.3527083

- **ALBERTO PERUZZO ET AL: "Quantum walks of correlated particles", ARXIV.ORG, CORNELL UNIVERSITY LIBRARY, 201 OLIN LIBRARY CORNELL UNIVERSITY ITHACA, NY 14853, 24 June 2010 (2010-06-24), XP080485208, DOI: 10.1126/SCIENCE.1193515**

**Description**

The present invention concerns in general the techniques for performing photonic simulation of two-dimensional physical systems. In particular, the simulations are mainly based on the implementation of so-called "quantum walks" of the photons of light in a two-dimensional space.

In recent years a large number of controlled and versatile artificial systems have been developed, capable of reproducing specific forms of quantum dynamics. These systems may be used to simulate existing systems, allowing the investigation of phenomena that cannot be easily detected in real materials. In other cases, such systems provide a suitable platform for implementing and testing toy models, or elements of quantum algorithms and quantum computation. Quantum walks, the quantum counterpart of classical random walks, represent a simple and versatile quantum dynamic that is proving to be a valuable resource in the different contexts mentioned above. Initially they attracted great attention as candidates for implementing quantum research algorithms and universal quantum computing. At the same time, they were used to model the transport of energy in photosynthetic processes. Investigating their analogy with the dynamic evolution of electrons in periodic potentials, it has been discovered that quantum walks may be characterized by the same topological phases discovered in condensed matter systems for one-dimensional (ID) and two-dimensional (2D) systems of non-interacting particles. Finally, in their discrete time version, quantum walks show a time periodicity, thus representing a simple case of Floquet systems. Consequently, they may be used to investigate anomalous topological characteristics of the latter, in part different from those related to static topological insulators. Several platforms are known for making quantum walks and investigating their properties, such as, for example, those based on cold atoms trapped in optical grids, superconductive circuits or photonic systems.

In their simplest version, quantum walks describe the dynamic evolution of a single particle in a 1D grid. The dynamics may be in continuous time or discrete time, where the latter case corresponds to a particle that is coupled to neighboring sites only in discrete time steps. The present invention refers to discrete time quantum walks. In quantum walk models, a so-called "walker" has a spin-type degree of freedom, i.e. the "coin", typically composed of two internal states indicated by ($|\uparrow\rangle$, $|\downarrow\rangle$). At each time step, the walker is moved to the next site to the left or right depending on whether the state of the coin is respectively $|\uparrow\rangle$ or $|\downarrow\rangle$. Between consecutive steps, to avoid a trivial dynamic, a unitary operation transforms the state of the coin in a combination of the two basic states, simulating the toss of a coin. In general, the grid may be characterized by a greater spatial dimensionality and have more complex topologies. In photonic systems, the coordinate of the grid has been encoded in different optical degrees of freedom, such as the time of arrival at the detector of a wave packet, the optical path of the beam, the orbital angular momentum. The coin is typically encoded in the degree of freedom of the polarization, or in the input port of a beam separator in the case of integrated photonic circuits. The possibility to control with great precision the evolution of the walker and the local properties of the grid have been exploited in a series of experiments, which observed the evolution of related photons, the effect of decoherence, the Anderson localization, quantum transport in the presence of disorder, the effect of interactions, topological phenomena of static systems and Floquet systems. These architectures, in particular those based on integrated circuits, are today ideal candidates for the processing of both classical and quantum-type information, as for example in the case of "deep learning" and "boson sampling".

**Non Patent Literature** document "Quantum walks and wavepacket dynamics on a lattice with twisted photons", SCIENCE, vol. 1, no. 2, 27 March 2015, reports the experimental realization of a discrete quantum walk taking place in the orbital angular momentum space of light, both for a single photon and for two simultaneous photons.

One of the aims of the present invention is to make available an alternative platform for the photonic realization of quantum walks, which have a compact and possibly scalable architecture.

For this purpose, the object of the invention is an apparatus for two-dimensional photonic simulation starting with a radiation beam, comprising

a series of stages of operation arranged consecutively along a reference axis and configured to be successively crossed by the radiation beam, each stage of operation comprising

i) a unitary operator consisting of at least one optical element configured to transform a polarization state of the incoming radiation beam into a combination of a right circular polarized state and a left circular polarized state, and
ii) a shift operator consisting of at least one optical element configured to discretely shift the transverse moment of the incoming radiation beam along at least one direction in a two-dimensional Fourier space associated with a real plane orthogonal to the reference axis,

an optical sensor configured to detect a grid of spots generated by the radiation beam upon application of said stages of operation, the intensity pattern of the grid of spots being indicative of a probability distribution associated with a quantum walk.

The alternative approach for the experimental realization of quantum walk processes according to the invention is based on the coding of the information of the walker in the direction of propagation, i.e. in the transverse wave vector of a laser beam. The coupling between close modes and the unitary transformation of the coin are preferably achieved by means of liquid crystal devices. In particular, the shift operators are implemented by means of Pancharatnam-Berry phase films (PB, below), made with liquid crystals.

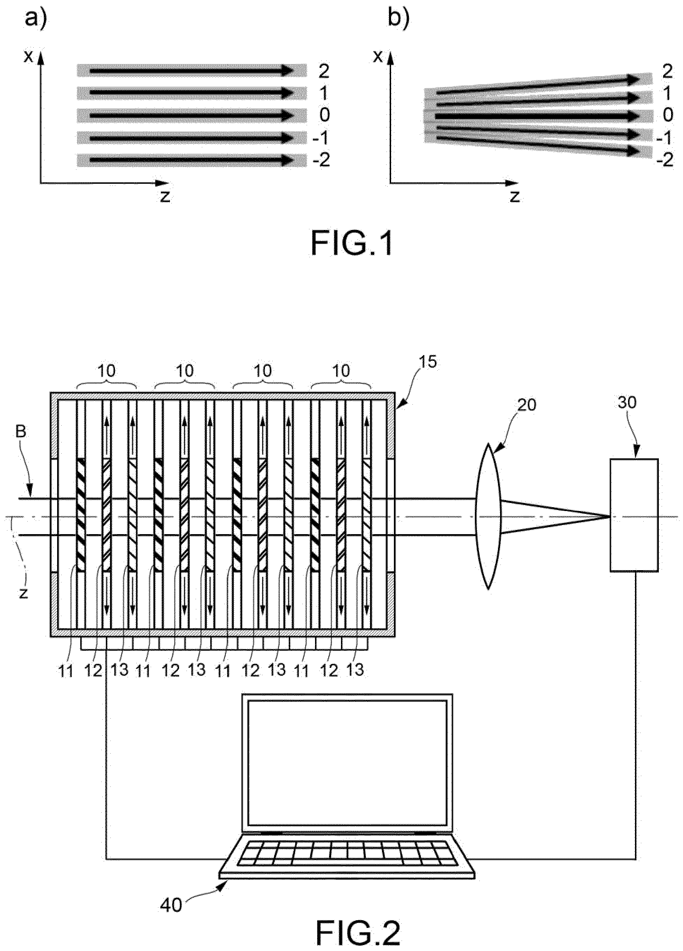

The invention consists in a photonic system that carries out the processing of information encoded in orthogonal spatial modes of light, which form a 2D grid, according to a quantum walk dynamic. A consolidated approach to encoding the position of the walker, reported for example in [1-5], consists in associating the different positions of the grid in the optical path of multiple beams that propagate along parallel directions, for example parallel to the axis z, , and are shifted laterally to each other (see figure 1a). In a realistic architecture these are Gaussian beams centered in positions $(x_m, y_n)$, where the whole numbers $(m, n)$ label the sites of the grid, and the shift between adjacent beams is sufficient for them to have a negligible superposition. It is important to note that although the approach of the aforementioned articles is suitable for coding 2D grids, only one-dimensional quantum walks have been achieved so far. In the present invention, the Fourier space associated with the transverse plane $(x, y)$ is instead considered, having as coordinates the transverse moments $(k_x, k_y)$. According to the invention, the position of the walker is coded on the grid in paths of the Fourier space $(k_x, k_y)$, i.e. considering combinations of Gaussian beams with slightly different transverse moments. Essentially, this corresponds to beams having propagation directions which are slightly inclined relative to the axis z in the directions x and y, with fixed inclination axes (see figure 1b). These beams remain completely spatially superposed throughout the simulation, thus forming a single beam structured within it. The decomposition of the different moment components occurs only at the end, to carry out the measurement, through a lens that achieves the spatial Fourier transform. One therefore considers a laser beam having the initial spatial distribution, which is that of a Gaussian mode, characterized by a beam waist $w_0$, which propagates in the direction z. In the Fourier space, the spatial envelope also has a Gaussian profile, with a beam waist $w_k = 2/w_0$ (see section II below). By labeling the positions on the grid with a pair of integers $(m, n)$, this fundamental mode is considered to be representative of the site (0,0). Thus, the generic site $(m, n)$ is obtained by moving the transverse wave vector by a quantity $m\Delta k$ and $n\Delta k$ respectively in the directions x and y. The moment shift is defined as $\Delta k = a\omega_k$, where a is a parameter that may be tuned to adjust the superposition between adjacent modes. Grids are considered to satisfy the requirement that $k_x, k_y \ll k = 2\pi/\lambda$, with $\lambda$ being the wavelength of the laser, i.e. the angle between the directions of propagation of the beams, and the axis z is small. As in many photonic systems that perform quantum walks, the degree of freedom of the coin is coded in the polarization of the light, defined by the left and right circular polarized states $|L\rangle$ and $|R\rangle$.

All the characteristics of a quantum walk dynamic are enclosed in the evolution operator U which realizes the evolution of a single step. Therefore, if the system is initialized in the state $|\psi(t = 0)\rangle$, at the time step t the quantum state is obtained by applying t times the operator U, i.e. $|\psi(t)\rangle = U^t|\psi(0)\rangle$. In a typical quantum walk system, the single-step operator is composed of two terms. A first operator W, which flips the coin, is a unitary operator in the space of the coin. In its most general form, it acts on the states of the coin such as

$$W|\uparrow\rangle = c_1|\uparrow\rangle + c_2|\downarrow\rangle; \qquad (1)$$

$$W|\uparrow\rangle = c_2^*|\uparrow\rangle - c_1^*|\downarrow\rangle, \qquad (2)$$

where $c_1$ and $c_2$ are complex parameters that meet the normalization condition $|c_1|^2 + |c_2|^2 = 1$. A second operator S implements the lateral shifts, conditioned by the state of the coin:

$$S = |\uparrow\rangle\langle\uparrow|S_+ + |\downarrow\rangle\langle\downarrow|S_-, \qquad (3)$$

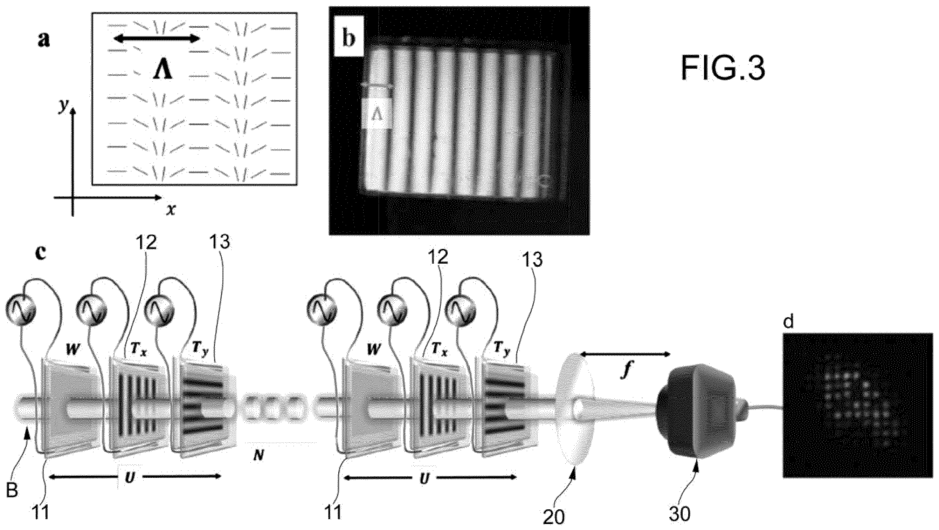

where $S_\pm|n\rangle = |n \pm 1\rangle$, $|n\rangle$ being the state vector representing a particle located in the site n. Preferably, both operators W and S are made by means of liquid crystal films (hereinafter, LC). These devices may consist essentially of a thin plate of LC, interposed between two sheets of glass. LCs are birefringent media and, as shown in Figure 3a, their molecular orientation may be engineered in a suitable way, forming different topologies. This property is the basis of the technology described in [6, 7], which uses the PB phase to control light. When a beam of light passes through a film LC with normal incidence, the field at the output of the film is simply obtained considering the action on the individual components of circular polarization:

$$Q|L\rangle = \cos(\delta/2)|L\rangle - i\sin(\delta/2)e^{+i2\alpha(x,y)}|R\rangle, \qquad (4)$$

$$Q|R\rangle = \cos(\delta/2)\,|R\rangle - i\sin(\delta/2)\,e^{-i2\alpha(x,y)}|L\rangle \qquad (5)$$

where $\alpha(x, y)$ is the angle formed by LC molecules with the axis $x$, and $\delta$ is the optical delay that originates from the birefringence of the material. A specific pattern of $\alpha(x, y)$ is imparted to the cell during manufacture, for example by means of photoalignment [7], while the parameter $\delta$ may be dynamically varied by adjusting the external voltage applied to the cell. Details of a possible method of manufacture of these LC films may be found in [7]. From (4) and (5) one sees how the component of the light that changes polarization acquires a phase $\pm 2\alpha(x, y)$ (with the sign depending on the initial polarization), which is precisely a PB phase.

In one embodiment, two different types of films are used. In order to make the operator $W$, films with a homogeneous value of $\alpha$, are produced, thus obtaining the standard birefringent films, with tunable delay, used for the manipulation of the polarization. By selecting the global orientation of the cell and the value of $\delta$, it is possible to achieve all possible operators $W$. To implement the operator $S$, it is possible to use films characterized by the following orientation pattern:

$$\alpha = \frac{\pi}{\Lambda}x + \alpha_0, \qquad (6)$$

where $\alpha_0$ is the residual angle a $x = 0$ and A is the spatial periodicity (see Figure 3a-b). It is emphasized here that $\alpha$ is defined modulo $\pi$, being associated with the orientation of the LC molecular director. By inserting this expression in eq. 4, and setting $\delta = \pi$, it is clear to see that the left and right circular polarization components acquire a phase factor $\pm px$($p$ = $2\pi/\Lambda$), respectively, thus gaining a transverse moment $k_x = \pm p$. These cells are "PB phase prisms", i.e. polarization gratings [8,9], and the associated operator is referred to as $T_x$:

$$T_x|L\rangle = \cos(\delta/2)\,|L\rangle - i\sin(\delta/2)\,e^{i(2\alpha_0+px)}|R\rangle, \qquad (7)$$

$$T_x|R\rangle = \cos(\delta/2)\,|R\rangle - i\sin(\delta/2)\,e^{-i(2\alpha_0+px)}|L\rangle \qquad (8)$$

Similarly, the operator which moves the transverse moment along the direction $y$ is indicated at $T_y$. It is important to note here that the shift may actually be implemented in any direction in the plane $(x, y)$. Disregarding the fact that the circular polarization of the input is reversed, an aspect that does not actually influence the dynamics of the quantum walk (and that, if desired, may be neutralized by the films W), it may be observed that the operator $T_x$ is equivalent to the shift operator $S$. It is important to note that the family of operators obtained by varying $\delta$ is considered, thus having at their disposal a set of protocols that may have significant differences with respect to the standard case $\delta = \pi$.

The evolution of the quantum walk is achieved by propagating a laser beam through a sequence of the aforesaid optical elements, which are combined in an appropriate way to obtain specific quantum walk protocols. At the beginning of the walk, the polarization of the light is selected by means of conventional wave films, so as to set the desired input state of the coin. A single Gaussian beam may be used to simulate the walk that results from a localized state; however, the beam may be prepared in any input state by appropriately controlling the spatial distribution of the field, using for example a spatial light modulator. The single-step operator consists therefore of a combination of polarization gratings and wave films, depending on the quantum walk protocol to be implemented. Figures 2 and 3c show the architecture used to create a two-dimensional multi-step quantum walk, with each single step consisting of a quarter-wave film ($\delta = \pi/2$) and two polarization gratings oriented along orthogonal directions. These optical elements may be combined into a compact structure, designed to minimize the length of the overall system. The inventors made the individual components about 1 cm thick, mainly due to the use of plastic casings and glass films for the manufacture of LC cells. However, the LC layer is only a few microns thick, so there is the possibility of significantly reducing the overall thickness by acting only on plastic and glass components that have no effect on the manipulation of the polarization and spatial properties of the beam.

The optical elements made by the inventors have a transmission of about 80-85%, but the losses due to reflection could be significantly reduced by equipping the films with a standard anti-reflection coating. Low losses make the system ideal for the study of the evolution of quantum photonic states composed of a few photons, such as three-photon states used for "boson sampling" applications, which until now have been studied only in one-dimensional systems.

Features and advantages of the system according to the invention will become more apparent in the following detailed description, made with reference to the accompanying drawings, provided purely to be illustrative and non-limiting, wherein:

- Figure 1 represents the coding of two-dimensional grids a) in the path of propagation of several beams according to conventional systems, and b) in the direction of propagation of a beam of light according to the invention;
- Figure 2 schematically represents a system for performing quantum walks according to the invention;
- Figure 3 represents: a) the diagram of a liquid crystal Pancharatnam-Berry phase film (or polarization grating), of which the inhomogeneous pattern of the optical axis is given by $\alpha = \frac{\pi}{\Lambda} x + \alpha_0;$ b) a photo of a film illuminated with white light and seen through two crossed polarizers, so as to show the structure of the optical axis; the distance between consecutive dark fringes is $\Lambda/2$; c) the experimental diagram for a two-dimensional quantum walk protocol. A collimated beam passes through a series of devices based on liquid crystals, the action of which is described by the quantum walk operator. The image of the resulting final probability distribution (box d) is formed on an optical sensor positioned at the focus of a lens that optically implements the spatial Fourier transform of the input field. The separation between the different spots depends on the ratio between the beam waist $w_0$ and the step $\Lambda$. In the demonstration experiment carried out by the inventors, $w_0 \approx \Lambda$ = 5 mm was chosen.

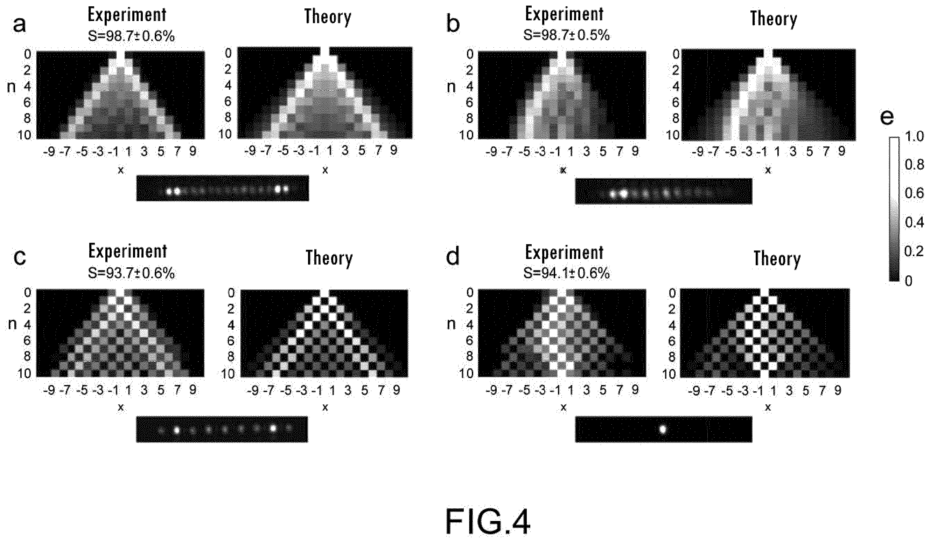

- Figure 4 represents, for demonstration purposes, a quantum walk on a one-dimensional grid with and without the application of a constant external force. In particular, graphs of the calculated and measured probability distributions of 10-step quantum walks are represented with an input state $|H, 0\rangle$. a-b), distributions at $\delta = \pi/2$ with (a)$F = 0$ and (b) $F = \pi/5$. The box e) represents the color scale used in all charts. c-d), distributions at $\delta = \pi$ with (c) $F = 0$ and (d) $F = \pi/5$. In box d) an almost complete refocusing of the initial state is observed, while this does not happen for $\delta = \pi/2$ because of the high probability associated with Landau-Zener transitions. All inserts show experimental intensity patterns on the focal plane after the 10th step. All distributions shown correspond to averages over four different measurements. For each step, the "similarity" between the theoretical and experimental distribution was calculated. The figure shows the mean similarity over all the steps. Errors are obtained by propagating the standard deviations of the evaluated mean for each position of the individual distributions;

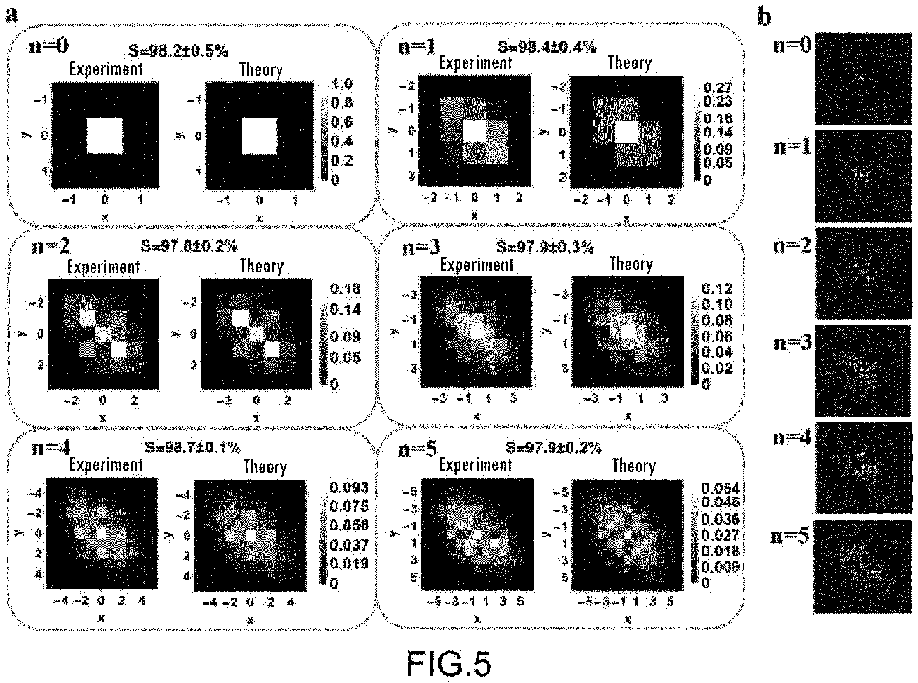

- Figure 5 represents, for demonstration purposes, a two-dimensional quantum walk on a square, two-dimensional grid, and in particular: a) the theoretical and experimental probability distributions of the two-dimensional quantum walk protocol presented in the description, which is known to present non-trivial topological phases. A 5-step process with $\delta = \pi/2$ and input status $|H, 0,0\rangle$ was implemented. Experimental distributions are means over four different measurements, from which errors for individual positions were extracted as standard deviations of the mean. These uncertainties have been propagated to obtain errors on the similarity shown in the figure. b), examples of intensity patterns on the focal plane. Probability distributions are obtained from these images by measuring the relative intensity of the individual light spots;

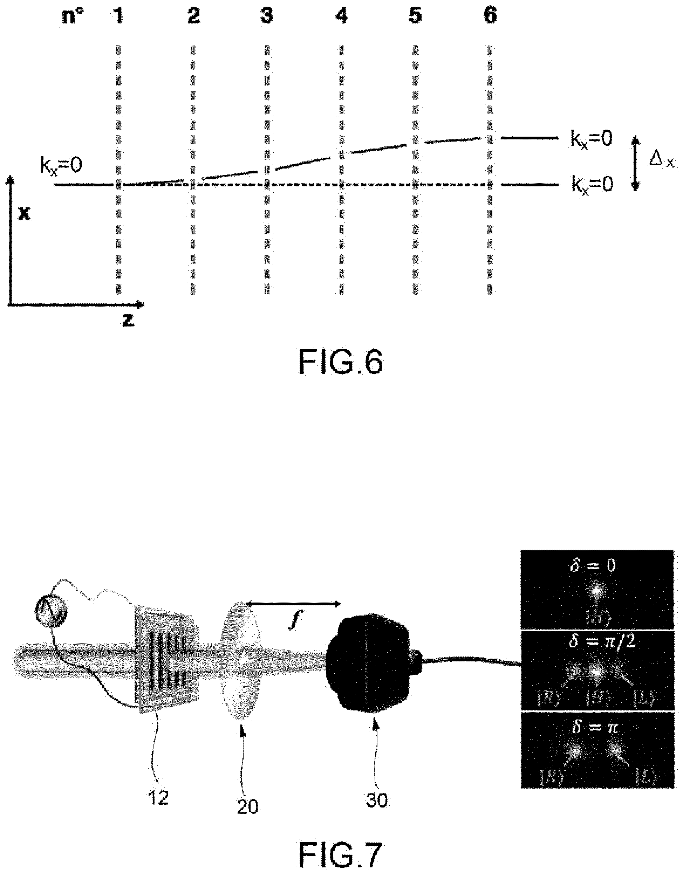

- Figure 6 shows deviations from the ideal simulation of a quantum walk process. At the input of the quantum walk, there is a single beam with $k_x = 0$, located at the site of the grid $m = 0$. At the output of a 7-step quantum walk, two contributions to the final wave function at the site $m = 0$ are considered. One comes from the side of the input state that has remained unchanged. The second gained transverse moment $\Delta k$ in the first three steps, and then gained an opposite moment in steps 4 to 6. At the output of the walk, also this component corresponds to the site of the grid $m = 0$. However, the associated beams have some differences, which represent deviations from the ideal quantum walk; being linked to the same site of the grid, they should be identical. First, they leave the walk shifted laterally by $\Delta x$, and the lack of superposition may change the interference. Second, the upper beam traveled a greater distance, and thus accumulated a relative phase with respect to the central beam. Finally, at each polarization grating, the effective value of $\alpha_0$ changes in each step for the deviated beam;
- Figure 7 represents the operating principle of a tunable polarization grating: a linearly polarized input beam passes through the device and is then focused by a lens, which performs a two-dimensional Fourier transform. Then the local distribution of the transverse wave vector downstream of the polarization grating is mapped to the focal plane. The boxes show the distributions obtained for different values of the optical delay $\delta$ (which may be controlled by an alternating voltage applied to the cell). At $\delta = 0$, the device acts as an identity operator and, therefore, there is only one central spot with unchanged polarization, i.e. the Fourier transform of the input Gaussian beam. At $\delta = \pi/2$, two lateral spots with opposite circular polarizations appear. At $\delta = \pi$, the central spot is deleted. The separation between the different spots depends on the ratio between the beam waist $w_0$ and the step $\Lambda$. In the experiment carried out by the inventors, $w_0 \approx \Lambda$ = 5 mm was chosen. This ensures low superposition (approx. 0.8%) between adjacent spots; and

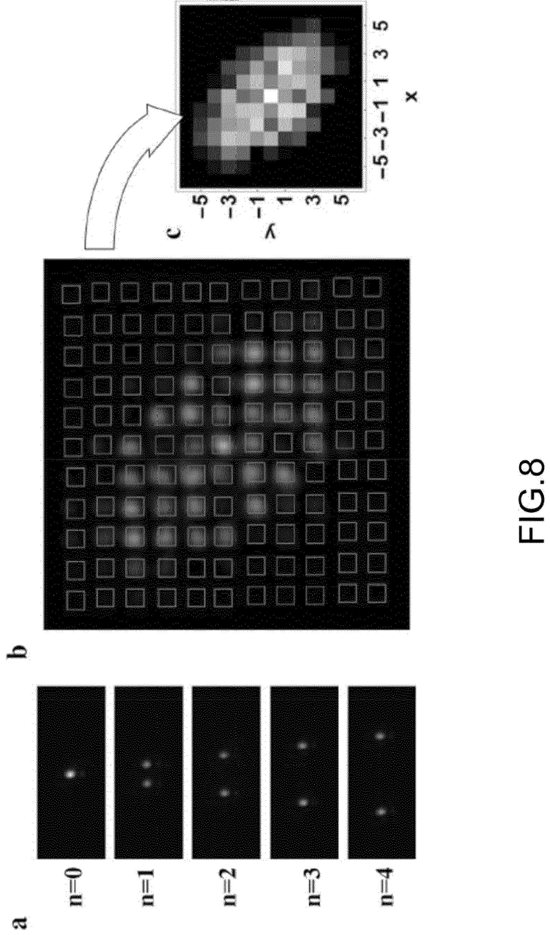

- Figure 8 represents the extraction of the probability distributions from the recorded intensity patterns: a) examples of intensity patterns obtained with the calibration protocol $U = T_x(\pi) \cdot HWP,$ where $HWP$ is a conventional half-wave film. A linearly polarized input state is separated into two beams with opposite circular polarizations. In each step the direction of propagation of these beams is changed by a quantity corresponding to the size of the grid cell. This process may be used to identify the coordinates of the grid sites on the optical sensor. Boxes b) and c) show the probability distributions obtained from the intensity patterns, downstream of the calibration procedure. The squares in b) represent the regions on which the total intensities associated with specific grid sites are calculated (since individual spots occupy a small number of pixels, there is no substantial difference in using square or circular integration regions). Normalizing the sum of all intensities to 1 gives the probability distribution (c).

Figures 2 and 3c represent an embodiment of a photonic system according to the invention. This system is configured to create a quantum walk starting from a radiation beam, indicated at B in the figures. This radiation beam is in particular a beam of laser light, produced by a generation system (not illustrated) with a pre-established initial polarization state.

The system comprises a series of identical evolution stages 10, arranged consecutively along a reference axis z and configured to be successively crossed by the radiation beam B. In the following description, the coordinates in a plane orthogonal to the axis z are defined by a pair of axes x and y.

As described above, each evolution stage 10 is configured to achieve a single step of the quantum walk. In particular, each evolution stage 10 comprises

i) a unitary operator 11 consisting of at least one optical element configured to transform a polarization state of the incoming radiation beam B into a combination of a right circular polarized state $|R\rangle$ and a left circular polarized state $|L\rangle$, and

ii) a shift operator consisting of at least one optical element (in the example, two optical elements 12, 13) configured to discretely shift the transverse moment of the incoming radiation beam B, along at least one direction in a two-dimensional Fourier space $(k_x, k_y)$ associated with a real plane $(x, y)$ orthogonal to the reference axis z.

In particular, as explained above, the optical element 11 of the unitary operator consists of a film tunable in optical delay including a liquid-crystalline material, the arrangement of the molecular director of the material being homogeneous in the plane orthogonal to the reference axis z. Each of the optical elements 12 and 13 of the shift operator consists instead of a PB phase film (or polarization grating) including a liquid-crystalline material, the arrangement of the molecular director of the material being defined periodically along a direction in a plane orthogonal to the reference axis z. In particular, the arrangement of the molecular director of the material of the film is defined by the relationship

$$\alpha(x, y) = \frac{\pi}{\Lambda}x + \alpha_0$$

for optical elements 12 and by a similar but coordinate-dependent relationship y for the optical elements 13.

The optical delay applied by the optical elements 11, 12, 13 may be conventionally tuned by controlling a voltage applied to the individual films 11, 12, 13.

A supporting structure 15 may be provided to contain the optical elements 11, 12, 13. The support structure 15 may be configured to allow the position of the optical elements 12 and 13 of the shift operator to be tuned in at least one direction orthogonal to the axis z.

The system further comprises at least one optical focusing element 20 located downstream of the evolution stages 10, in the focus of which is placed an optical sensor 30, for example a CMOS sensor, configured to detect a grid of spots generated by the radiation beam B following the application of the evolution stages 10. As explained above, this pattern of intensity of the grid of spots is indicative of a probability distribution associated with the quantum walk.

A processing and control apparatus, collectively represented by the element indicated at 40, is provided for the management of the system, for example to receive and process the signals supplied by the sensor 30 and, if necessary, to manage the tuning of the optical elements 11, 12 and 13.

## I. PROOF OF PRINCIPLE

### A. Description of the experimental apparatus

As described above, the information on the position in the walker's grid at the transverse moments of a laser beam is coded. In such a configuration, a particle localized at the site h and in the state of polarization (coin) $|s\rangle$ may be represented in terms of a plane wave $|h, s\rangle \rightarrow \exp(ihpx + ik_z z)\mathbf{s}$, where p corresponds to the size of the unit cell, $\mathbf{s}$ is a complex unit vector that represents the polarization of the electric field, $k_z$ is the projection of the wave vector along the axis z. Similarly, a particle on a two-dimensional grid located at the site $(l,m)$ is simulated by a plane wave of the form $\exp(ip(lx + my) + ik_z z)\mathbf{s}$. The direction of propagation of these waves forms angles $\theta_x \simeq k_x \lambda(2\pi)$ and $\theta_y \simeq k_y \lambda(2\pi)$ respectively relative to the planes $(x, z)$ and $(y, z)$. In order to keep the entire beam collimated and to correctly reproduce the dynamics of the quantum walk, only directions of propagation such as $\theta_x, \theta_y \ll 1$ are considered (see section II A).

As shown in Figure 3c, the quantum walk is implemented by alternating quarter-wave films and liquid crystal polarization gratings. A light beam B passes through the system (shown in Figures 2 and 3c) becoming a superposition of beams, with transverse wave vector components that are integer multiples of the constant $p$. The amplitude of the final electric field $\mathbf{E}$ of the wave will be of the following form (a similar expression applies to the one-dimensional case):

$$\mathbf{E}(\mathbf{r}) \propto \sum_{\mathbf{t}}\big(a_{R,\mathbf{t}}\mathbf{e}_R + a_{L,\mathbf{t}}\mathbf{e}_L\big)\exp(ia\mathbf{t}\cdot\mathbf{r}), \qquad (9)$$

where $a_{R,\mathbf{t}}$ and $a_{L,\mathbf{t}}$ are complex coefficients, $\mathbf{t} = (l, m)$ are the indices of the position in the grid, $\mathbf{r} = (x, y)$ is the position vector in the plane transverse to the direction of propagation, and $\mathbf{e}_{R/L}$ are the unit vectors associated with the circular polarization $R/L$. By positioning a convergent lens (20 in figures 2 and 3c) at the end of the quantum walk, the two-dimensional Fourier transform of the field $\mathbf{E}(\mathbf{r})$ is obtained in the focal plane. Thus the final probability distribution, $P(\mathbf{t})$ = $|a_{R,\mathbf{t}}|^2 + |a_{L,\mathbf{t}}|^2$, may be directly observed with an optical sensor 30 positioned in the focus of the lens and measuring the light intensity of the spots positioned at the transverse moments associated with the individual sites of the grid.

However, in a more realistic representation, the plane waves should be replaced by Gaussian modes. In this case, the Fourier transformed field presents a pattern of intensity consisting of Gaussian spots distributed regularly, as shown for example in Figure 3d. In the apparatus described above, an input beam consisting of a Gaussian mode with a beam waist $w_0 \simeq 5$ mm is considered, which in the Fourier domain corresponds to a waist $\omega_k = 2/w_0$. The polarization gratings are manufactured with a spatial periodicity $\Lambda = 5$ mm. In this way, the moment separation between adjacent spots $\Delta k = 2\pi/\Lambda$ is equal to the waist $\omega_k$ multiplied by $\pi$, providing an effective superposition between the associated adjacent Gaussian modes of about 0.8%. A detailed analysis of the experimental system may be found in section II A, while section II D describes the technique used to extract probability distributions from intensity patterns taking into account experimental imperfections.

For a first characterization, a one-dimensional quantum walk with a single-step operator defined as

$$\mathcal{U}(\delta, \alpha_0) = T_x(\delta, \alpha_0) \cdot W$$ is implemented. In particular, it reproduces experimentally an evolution of 10 steps

$$\big(\mathcal{U}^{10}(\delta,0)\big)$$ for $\delta = \pi/2$ and $\delta = \pi$ with the initial state $|H, h = 0\rangle = (|R, 0\rangle + |L, 0\rangle)/\sqrt{2}$. Figures 4a and 4c show the good agreement between the experimental results and the theoretical predictions, as confirmed by the measured values of similarity, defined as follows:

$$S = \frac{\left(\sqrt{\sum_m Ex(m)Th(m)}\right)^2}{\sum_h Ex(h)\sum_i Th(i)}, \qquad (10)$$

where $Ex(m)$ and $Th(m)$ are respectively the values of the experimental and theoretical distributions evaluated at the site $m$. The values of S shown in figure 4 are the means of the similarities of the distributions of the single step.

## C. Experimental data for a one-dimensional quantum walk when a constant force is applied to the particle

One may also reproduce the effect of a constant force applied to the walker, obtained for example in the case of a charged particle in a constant electric field. This is equivalent to having the quasi-momentum $\kappa$ of the particle varying linearly with the number of steps. Thus, the evolution operator of the step $t$, written in the reciprocal space, must meet the condition $\mathcal{U}_t(\kappa) = \mathcal{U}_0(\kappa + Ft)$, where $F$ is the external force. In the system described here, this may be easily achieved by shifting the individual polarization gratings 12, 13 in the direction $x$ (thus shifting the effective $\alpha_0$) by a measure proportional to the corresponding number of steps (section II A illustrates the experimental procedure). This provides the following evolution operator for the $t$-th step (see section II E for the proof):

$$\mathcal{U}_n(\delta, \alpha_0) = \mathcal{U}_0(\delta, \alpha_0 + t\, F/2), \qquad (11)$$

where one considers dimensionless units such that the Brillouin zone is the interval $\kappa \in \{-\pi, \pi)$, and $F$ is a dimensionless amount. Assuming $F = \pi/5$, one may simulate a process wherein the quasi-momentum eigenstates are transported through the entire Brillouin zone in 10 steps. Figures 4b and 4d show the experimental and theoretical results for (b) $\delta$ = $\pi/2$ and (d) $\delta = \pi$. For $\delta = \pi$ one observes an almost complete refocusing of the quantum state regardless of the initial polarization. This result is compatible with the adiabatic theory that predicts a perfect refocusing independent from the initial state when the acquired dynamic phase is an integer multiple of $\pi$ (i.e. the case for $\delta = \pi$, for an even number of steps). The existence of small contributions from other sites of the grid may be attributed to non-adiabatic effects, as described in Section II E.

It has been experimentally verified that the final state has the same polarization of the input beam by measuring the reduced Stokes parameters, $s_i = \langle \sigma_i \rangle$ ($i$ = 1,2,3), of the central spot, corresponding to the input site of the grid $m$ = 0. Here $\sigma_i$ are the three Pauli operators acting in the space of the coin. Defining $|\phi_n\rangle$ as the (normalized) polarization state of the spot at the site $h$ = 0 after $n$ steps, the quantity was calculated $R = |\langle \phi_0 | \phi_{10} \rangle|^2$, obtaining $R$ = 0.99 $\pm$ 0.01.

At $\delta = \pi/2$, no refocusing is observed. In this case the quasi-energy spectrum, i.e. the spectrum of the effective Hamiltonian operator, defined as $\mathcal{H}_{eff}(\kappa) = -i\ln\mathcal{U}(\kappa),$ shows a gap that closes at the center of the Brillouin area. This breaks the adiabatic approximation giving rise to Landau Zener interband transitions that destroy the refocusing effect (Fig. 4b).

**D. Quantum walk protocol on two-dimensional grids**

A two-dimensional quantum walk protocol is now introduced for a particle moving in a two-dimensional grid but with a two-state coin. It is important to note that, by tuning the parameter $\delta$, it is possible to create protocols the Bloch bands of which have trivial or non-trivial Chern numbers. The protocol implemented by the inventors is defined by the single step operator $\mathcal{U}_{2D}(\delta) = T_y(\delta, \alpha_0) \cdot T_x(\delta, \beta_0) \cdot W,$ where it is required that the two orthogonal polarization gratings have the same optical delay. The angles $\alpha_0$ and $\beta_0$ are arbitrary (and independent of the step if one considers processes without external fields) and will be omitted in the following. From the effective Hamiltonian

$$\mathcal{H}_{2D,eff}(\boldsymbol{\kappa}, \delta) = -i\ln\mathcal{U}_{2D}(\boldsymbol{\kappa}, \delta) = E(\boldsymbol{\kappa}, \delta)\mathbf{n}(\boldsymbol{\kappa}, \delta) \cdot \boldsymbol{\sigma} \qquad (12)$$

the topological invariants of the system may be calculated. Here $\kappa = (\kappa_x, \kappa_y)$, $E(\kappa, \delta)$ are the quasi-energies, $\mathbf{n}(\kappa, \delta)$ the unit vector representing the eigenstate of $\mathcal{H}_{2D,eff}(\boldsymbol{\kappa}, \delta),$ and $\sigma = (\sigma_x, \sigma_y, \sigma_z)$. The Chern number was numerically calculated and, in a two-tier system, may be written as:

$$C = \frac{1}{4\pi}\int_{BZ} d^2\boldsymbol{\kappa}\left(\partial_{k_x}\mathbf{n}(\boldsymbol{\kappa}, \delta) \times \partial_{k_y}\mathbf{n}(\boldsymbol{\kappa}, \delta)\right) \cdot \mathbf{n}(\boldsymbol{\kappa}, \delta), \qquad (13)$$

where the integral is evaluated on the Brillouin zone, i.e. the square region $BZ = \{-\pi \leq \kappa_x \leq \pi, -\pi \leq \kappa_y \leq \pi\}$. The result is that $C$ = 1 for $\pi/4 \leq \delta \leq 3\pi/4$ and $C$ = 0 for the other values in the range $\delta \in \{0, \pi\}$.

The inventors have experimentally achieved 5 steps of the protocol described above and have observed the evolution in the non-trivial phase $\delta = \pi/2$. Figure 5 shows the results of the experiment in excellent agreement with the theoretical simulations, as confirmed by the high values of similarity. Here an initial state has been chosen, localized at the origin: $|x = 0, y = 0\rangle$ and polarized horizontally ($H$).

**II. TECHNICAL ASPECTS AND FUNDAMENTAL ISSUES ASSOCIATED WITH QUANTUM WALKS**

**A. Details of the experimental platform**

The platform described consists of a sequence of anisotropic optical devices, i.e. quarter-wave and PB phase films (polarization gratings), the overall action on a laser beam of which may reproduce a quantum walk. Polarization gratings are characterized by an optical axis which is a linear function of a Cartesian coordinate $\zeta$, i.e. $\alpha(\zeta) = \alpha_0 + (\pi/\Lambda)\zeta$. Oriented gratings along $\zeta = x$ or $y$ are considered. As already shown in the equation 7, their Jones matrix (written in the base of circular polarizations $\{|R\rangle, |L\rangle\}$ is:

$$T(\zeta, \delta, \alpha_0) = \begin{pmatrix} \cos(\delta/2) & -i\sin(\delta/2)e^{i(2\alpha_0 + p\zeta)} \\ -i\sin(\delta/2)e^{-i(2\alpha_0 + p\zeta)} & \cos(\delta/2) \end{pmatrix}. \quad (14)$$

The operating principle of the polarization grating is illustrated in figure 7: an input beam may acquire a phase factor dependent on the transverse coordinate $\exp(\pm ip\zeta)$ (where the sign is conditioned by the input polarization) by modifying the corresponding component of the wave vector by a factor $p = 2\pi/\Lambda$. The fraction of the input wave that is deflected is equal to $\sin^2(\delta/2)$. The description of the quantum walk is obtained by associating the ket $|n, m\rangle$, which illustrates a particle located in the site $(n, m)$ of a square grid (with integers $n$ and $m$) to the plane wave $\exp(ip(nx + my))$. The grid of the corresponding quantum walk is then coded from the possible values of the components of the transverse wave vector, uniformly spaced by $\Delta k = p$. The action of a polarization grating oriented along the direction $\zeta$ may be written in the base $\{|n, s\rangle\}_{n \in R}^{s = R, L}$ (suppressing for simplicity the index $m$ of the orthogonal coordinate) as:

$$T_\zeta(\delta, \alpha_0) = \sum_{n, n'} \tilde{T}(\zeta, \delta, \alpha_0) \otimes |n\rangle\langle n'| \qquad (15)$$

where $\tilde{T}(\zeta, \delta, \alpha_0)$ is an operator acting on the polarization space given by the Fourier transform of 14:

$$\tilde{T}(\zeta, \delta, \alpha_0) = \int_{-\Lambda/2}^{\Lambda/2} T(\zeta, \delta, \alpha_0)\, e^{ip\zeta(n'-n)} \frac{d\zeta}{2\pi}. \qquad (16)$$

The result is the translation operator

$$T_\zeta(\delta, \alpha_0) = \cos(\delta/2)\, \mathbb{I} - i\sin(\delta/2) \sum_n (|L\rangle\langle R| \otimes S_+ + h.c.), \qquad (17)$$

which generalizes the equation 3. Note that, in this physical implementation, the spatial coordinate $\zeta$ has the role of quasi-momentum, so the Brillouin zone (one-dimensional) is defined in the interval $[-\Lambda/2, \Lambda/2)$, while the transverse wave vector of the light $\mathbf{k}_t$ is associated with the space of the grid.

Given an input beam described by a plane wave, the final intensity distribution $I(\mathbf{k}_t)$ of the transverse wave vector $\mathbf{k}_t = (k_x, k_y)$ will be a weighted superposition of Dirac's delta functions:

$$I(\mathbf{k}_t) = I_{tot} \sum_{(\mathbf{t}, \sigma)} P(\mathbf{t}, \sigma)\, \delta(\mathbf{k}_t - p\mathbf{t}), \qquad (18)$$

where $\sigma = R/L$, $\mathbf{t} = (m, n)$ labels the site of the grid, $P(\mathbf{t}, \sigma)$ are coefficients that correspond to the probabilities of the quantum walk, and $I_{tot}$ is the total intensity of the beam. This distribution may be experimentally displayed by placing an optical sensor in the focal plane of a lens that performs the two-dimensional Fourier transform of the incident beam.

Here is discussed in greater detail the fact that, in the actual experiment, one must consider the widening of the aforesaid delta functions due to the limited spatial extent of the input laser beam. Thus, to extract the correct probability distributions of the simulated quantum walk, one must require that such enlargement be less than the step of the grid. This is necessary because the superposition of different spots may lead to unwanted interference effects that may alter the relative intensity associated with a given site. The final beam of the quantum walk may be described by a complex superposition of Gaussian beams, each with a different wave vector. A single mode with a small transverse wave vector $(k_x, k_y)$ may be written approximately as:

$$G(x, y, z; k_x, k_y) \propto \frac{w_0}{w(z)} e^{-(x^2+y^2)/w(z)^2} e^{ik(x^2+y^2)/2R(z)} e^{i\left(k_x x + k_y y + k_z z + \xi(z)\right)}. \qquad (19)$$

Here, $w(z)$, $R(z)$ and $\xi(z)$ are the parameters of the beam, defined as in [10], $w_0$, is the radius of the waist, $k = 2\pi/\lambda$ and $(k_x, k_y) = (mp, np)$. It has been assumed that $k_x, k_y \ll k_z$, so that the parameters of the beam may still be considered as functions of the single coordinate $z$. If one places a converging lens at the end of the quantum walk, the field distribution $\tilde{G}$ in its focal plane will correspond to the distribution of the transverse wave vector, i.e.:

$$\tilde{G}(X, Y; k_x, k_y) \propto \int_\Omega dx\, dy\, G(x, y, d; k_x, k_y)\, e^{-i\frac{k}{f}(Xx + Yy)}, \qquad (20)$$

where $\Omega$ is the transverse plane, $d$ the distance of the lens from the beam waist (positioned in $z = 0$), $f$ the focal length of the lens, and $(X, Y)$ the spatial coordinates in the focal plane of the lens. The intensity of the focused Gaussian beam will be:

$$\left|\tilde{G}\left(X,Y;k_x,k_y\right)\right|^2 \propto \exp\left(-2\,\frac{(k_x-kX/f)^2-(k_y-kY/f)^2}{\omega_k^2}\right). \qquad (21)$$

with $\omega_k = 2/w_0$. Thus $\omega_k$ is a measure of the radius of the spots that appear in the focal plane. The superposition between different spots may be considered small if $p \geq 2\omega_k$. In the experiment described, polarization gratings with a step $\Lambda = 5$ mm and a beam waist of the same order of magnitude: $w_0 \approx 5$ mm are used. In the inserts of figure 7 one may appreciate the separation between the spots. As discussed above, the superposition of adjacent modes is about 0.8%.

## B. Possible deviations from the ideal quantum walk evolution

A brief description of the consequences of the relative spatial shift of the different plane waves will be provided below. Adding a transverse component to the wave vector causes an inclination of the corresponding mode during propagation within the quantum walk. Until now, the effects of this inclination on the propagation of the beams have not been considered. For simplicity, one refers again to a description in terms of plane waves. At the end of the quantum walk, each value of $\mathbf{k}_t$ will correspond to the superposition of waves that have followed different paths in the wave vector space, as shown in Figure 6. Each of these stories corresponds to a different optical path the associated phase of which is not considered in the description of the quantum walk. An additional consequence of this effect is that a shifted plane wave sees the next polarization grating with a value shifted by $\alpha_0$. In effect, if on the plane of the polarization grating the mode of interest has been shifted by $\Delta x$ relative to the input mode, the action of the polarization grating will be described by replacing in 14 the formula: $\alpha(x) = \alpha_0 + p/2\,(x + \Delta x) = \alpha_0' + p/2\,x,$ i.e., there is a mode-dependent angle shift $\alpha_0$: $\alpha_0' + p/2\,\Delta x.$ Thus, to the additional relative phases related to optical path differences, one must add these relative (and path-dependent) angle shifts $\alpha_0$.

These effects may be quantified by considering the maximum displacement that a given plane wave may acquire after $N$ steps of the quantum walk. This happens in the way that, at each step, the transverse wave vector component increases by a quantity $p$. This corresponds to a deflection, at the step $n$, of an angle $\theta_n = \arctan(k_x/k) \approx k_x/k$ with $k_x = np$. If $d$ is the distance between two successive grids, it is easy to show that the maximum shift in real space, at the step $N$ is $\Delta x_N = dp\lambda N\,(N+1)/(\pi)$: which, with the system parameters indicated above, is, after 10 steps, $\Delta x_{10} \approx 0.1$ mm, i.e. two orders of magnitude less than the beam diameter.

The relative phase shift due to optical path differences for a single step is approximately: $\delta\phi_{opt} \approx k\Delta x(p/k) = \pi d\lambda/\Lambda^2$ which is on the order of $10^{-3}\pi$ with the parameters considered. Of the same order of magnitude is the phase shift induced by the variation of the effective value of $\alpha_0$, given that $\Delta\alpha_0 \approx \delta\phi_{opt}$.

## C. Alignment of polarization gratings

The quantum walk protocols that have been implemented require precise relationships between the angles $\alpha_0$ of all translation operators $T_\zeta(\delta,\ \alpha_0)$. In the case of time-independent quantum walks, all grids should have the same value as $\alpha_0$, while the application of a constant force may be simulated by shifting the angle $\alpha_0$ of the step $n$-th of a quantity $Fn/2$ (see equation 11). The following procedure is used to experimentally align the grid positions. A circularly polarized laser beam with a diameter large enough to illuminate a region of the order of $\Lambda$, passes through the polarization grating tuned to $\delta = \pi/2$. Thus, the output beam is filtered by a linear polarizer (which selects horizontal polarization $H$) and the resulting intensity pattern is displayed on an optical sensor. By applying the Jones formalism, one finds that such pattern is given by:

$$I(x) = I_0\big(1 - \sin(2\alpha_0 + px)\big). \qquad (22)$$

Since $\alpha(x)$ is defined modulo $\pi$ (due to the asymmetry of reversal of the molecular director of the liquid crystals) this result allows the pattern of the optical axis to be uniquely identified. Once these patterns have been aligned by translating each polarization grating along the transverse direction, the time-independent protocol may be implemented. Quantum walks with an external field may then be performed by translating the grids by the desired amount relative to the reference position thereof, given by: $\Delta x_n = \Lambda Fn/(2\pi)$.

## EP 3 572 865 B1

**D. Extraction of probability distributions from the intensity pattern**

With the description provided above, it is expected to see the result of the quantum walk as a pattern of different Gaussian spots arranged on a regular grid. The probability distribution of the associated quantum walk may be extracted from the relative quantity of light around the grid sites, i.e. the probability $P(n, m)$ of finding the particle in the site $(n, m)$ may be calculated by normalizing the total intensity around a circular region, centered on the given site and with a radius given by the spot waist. In principle, the positions on the optical sensor corresponding to the grid may be extracted as follows: first, all the polarization gratings are placed at $\delta = 0$, so that a single spot appears on the optical sensor. The position of the spot corresponds to the origin of the grid. Thus, knowing the pixel equivalent of the size of the grid step, the positions of all sites may be calculated.

In practice, however, each spot may be slightly shifted from the position calculated by the aforesaid method. This may be due to a series of small experimental imperfections. A contribution may be ascribed to unwanted modulations in the patterns of the polarization gratings, which may be modeled with the following local optical axis angle: $\alpha(x, y) = \alpha_0 + p/2x + \epsilon(x, y)$, where $\epsilon(x, y)$ is a small but unknown function value. Another cause may be a small inclination of the polarization gratings, such that the coordinate $x$ in $\alpha(x)$ should be replaced with $x' = \cos(\theta)x + \sin(\theta)y$ (with small $\theta$, and different for each grating). These effects may be eliminated by following a different procedure in which the center of each spot is measured, and the corresponding grid site is assigned thereto. This procedure is simplified by using the following quantum walk protocol. First, one considers the one-dimensional protocol defined by the single-step operator $U = T_x(\delta = \pi) \cdot HWP$ where $HWP$ is a half-wave film (which may be described by the operator $\sigma_x$). The dynamics, shown in Figure 8a, are very simple: at each step the polarized component $L$ of the state is shifted by a site in one direction (e.g. left), while the polarized component $R$ is shifted to the right. If one starts with a linearly polarized input beam, in the successive steps one will see two separate spots (with opposite circular polarizations), which will be positioned at the time $t$, on the actual positions corresponding to the sites $t$ and $-t$. In this way, the coordinates of each site are reconstructed by making Gaussian fits for the two spots. The generalization to the two-dimensional case is clear, since the same protocol (carried out along a transverse direction, for example $x$) may be obtained by turning off ($\delta = 0$) the polarization gratings oriented along the perpendicular direction (for example $y$). In this way, by first turning off the operators $T_x$, and then the operators $T_y$, one may obtain the coordinates of the sites $(n, 0)$ and $(0, m)$ (with integers $n$ and $m$). The remaining sites may be easily found by taking, for example, the set of grid coordinates of the sites $(n, 0)$ and shifting them in quantities given by the coordinates of the sites $(0, m)$. Figures 8b and 8c show the result of this procedure.

Bibliographical References

[1] Kitagawa, T. et al., Observation of topologically protected bound states in photonic quantum walks, Nature Communications 3, 882 (2012).

[2] Broome, M. a. et al., Discrete Single-Photon Quantum Walks with Tunable Decoherence, Physical Review Letters 104, 153602 (2010).

[3] Peruzzo, A. et al., Quantum Walks of Correlated Photons, Science 329, 1500 (2010).

[4] Sansoni, L. et al., Two-Particle Bosonic-Fermionic Quantum Walk via Integrated Photonics, Physical Review Letters 108, 010502 (2012).

[5] Poulios, K. et al., Quantum Walks of Correlated Photon Pairs in Two-Dimensional Waveguide Arrays, Physical Review Letters 112, 143604 (2014).

[6] Marrucci, L. et al., Optical Spin-to-Orbital Angular Momentum Conversion in Inhomogeneous Anisotropic Media, Phys. Rev. Lett. 96, 163905 (2006).

[7] Piccirillo, B. et al., Photon spin-to-orbital angular momentum conversion via an electrically tunable q-plate, Applied Physics Letters 97, 4085 (2010).

[8] Chen, H. et al., Beam steering for virtual/augmented reality displays with a cycloidal diffractive waveplate, Optics Express 24, 7287 (2016).

[9] Lee, Y.-H. et al., Enhancing the resolution of a near-eye display with a Pancharatnam-Berry phase deflector, (2017), 10.1364/OL.42.004732.

[10] Saleh, B. E. A. et al., Fundamentals of photonics (Wiley-Interscience, 2009).

**Claims**

1. Apparatus for two-dimensional photonic simulation from a radiation beam (B), comprising
   a series of evolution stages (10) arranged consecutively along a reference axis (z) and configured to be successively crossed by the radiation beam (B), each evolution stage (10) comprising

> i) a unitary operator (11) consisting of at least one optical element configured to transform a polarization state of the incoming radiation beam (B) into a combination of a right circular polarized state $|R\rangle$ and a left circular polarized state $|L\rangle$, and
> ii) a shift operator (12, 13) consisting of at least one optical element configured to discretely shift the transverse moment $\mathbf{k}_t$ of the incoming radiation beam (B), along at least one direction ($k_x$, $k_y$) in a two-dimensional Fourier space associated with a real plane (x, y) orthogonal to the reference axis (z),

an optical sensor (30) configured to detect a grid of spots generated by the radiation beam (B) upon application of said evolution stages (10), the intensity pattern of the grid of spots being indicative of a probability distribution associated with a quantum walk.

**2.** Apparatus according to claim 1, wherein the unitary operator (11) comprises at least one birefringence tunable plate including a liquid crystal material, the arrangement of the molecular director of the material being uniform in a plane (x, y) orthogonal to the reference axis (z).

**3.** Apparatus according to claim 1 or 2, wherein the shift operator (12, 13) comprises at least one Pancharatnam-Berry phase element structured as a polarization grating including a liquid crystal material, the arrangement of the molecular director of the material being periodically defined along a direction in a plane *(x, y)* orthogonal to the reference axis (z).

**4.** Apparatus according to claim 3, wherein the arrangement of the molecular director of the material of the polarization grating is defined by the relationship

$$\alpha(\zeta) = \frac{\pi}{\Lambda}\zeta + \alpha_0,$$

where $\zeta$ = x or y, $\alpha(\zeta)$, defined modulo $\pi$, is the angle between the molecular director of the material of the polarization grating and one of the coordinate axes of the plane (x, y) perpendicular to the reference axis (z), $\alpha_0$ is the residual angle at $\zeta$ = 0 and $\Lambda$ is the spatial periodicity of the angle.

**5.** Apparatus according to claim 3 or 4, wherein the shift operator (12, 13) comprises two polarization gratings, the arrangement of the molecular director of the liquid crystal material in the two polarization gratings being periodically defined along respective directions orthogonal to each other in a plane (x, y) orthogonal to the reference axis (z).

**6.** Apparatus according to any of the preceding claims, comprising a support structure (15) carrying the series of evolution stages (10), the shift operator (12, 13) being mounted to the support structure (15) for adjustment in position along a direction orthogonal to the reference axis (z) to simulate the action of an external force on the quantum walk.

**7.** Apparatus according to any of the preceding claims, comprising at least one focusing optical element (20) interposed between the series of evolution stages (10) and the optical sensor (30), the optical sensor (30) being arranged at a focus of the focusing optical element (20).

**Patentansprüche**

**1.** Vorrichtung zur zweidimensionalen photonischen Simulation ausgehend von einem Lichtstrahl (B), aufweisend:

> eine Reihe von entlang einer Referenzachse (z) aufeinanderfolgend angeordneten Entwicklungsabschnitten (10), die dazu ausgestaltet sind, nacheinander von dem Lichtstrahl (B) durchquert zu werden, wobei jeder Entwicklungsabschnitt (10) aufweist:
>
>> i. einen unitären Operator (11), der aus mindestens einem optischen Element besteht, das dazu ausgestaltet ist, einen Polarisationszustand des einfallenden Lichtstrahls (B) in eine Kombination aus einem rechtszirkular polarisierten Zustand $|R\rangle$ und einem linkszirkular polarisierten Zustand $|L\rangle$ zu transformieren, und
>> ii. einen Shift-Operator (12, 13), der aus mindestens einem optischen Element besteht, das dazu ausgestaltet ist, den Transversalimpuls $\mathbf{k}_t$ des einfallenden Lichtstrahls (B) entlang mindestens einer Richtung ($k_x$, $k_y$) in einem einer realen Ebene *(x, y)* orthogonal zur Bezugsachse (z) zugeordneten zweidimensionalen Fourier-Raum diskret zu verschieben,

einen optischen Sensor (30), der dazu ausgestaltet ist, ein von dem Lichtstrahl (B) nach Anwendung der Entwicklungsabschnitte (10) erzeugtes Gitter von Spots zu detektieren, wobei das Intensitätsmuster des Gitters von Spots auf eine mit einem Quantum Walk in Beziehung stehende Wahrscheinlichkeitsverteilung schließen lässt.

2. Vorrichtung gemäß Anspruch 1, wobei der unitäre Operator (11) mindestens eine doppelbrechende, durchstimmbare Platte mit einem Flüssigkristallwerkstoff aufweist, wobei die Ausrichtung des molekularen Direktors des Werkstoffs in einer Ebene *(x, y)* orthogonal zur Referenzachse *(z)* homogen ist.

3. Vorrichtung gemäß Anspruch 1 oder 2, wobei der Shift-Operator (12, 13) mindestens ein Pancharatnam-Berry-Phasenelement aufweist, das als ein Polarisationsgitter mit einem Flüssigkristallwerkstoff strukturiert ist, wobei die Ausrichtung des molekularen Direktors des Werkstoffs entlang einer Richtung in einer Ebene *(x, y)* orthogonal zur Referenzachse *(z)* periodisch definiert ist.

4. Vorrichtung gemäß Anspruch 3, wobei die Ausrichtung des molekularen Direktors des Werkstoffs des Polarisationsgitters durch die Beziehung

$$\alpha(\zeta) \;=\; \frac{\pi}{\Lambda}\zeta + \; \alpha_0$$

definiert ist, wobei $\zeta$ = x oder y, $\alpha(\zeta)$, definiert Modulo $\pi$, der Winkel zwischen dem molekularen Direktor des Werkstoffs des Polarisationsgitters und einer der Koordinatenachsen der Ebene *(x, y)* orthogonal zur Referenzachse *(z)*, $\alpha_0$ der Restwinkel bei $\zeta$ = 0 und $\Lambda$ die räumliche Periodizität des Winkels ist.

5. Vorrichtung gemäß Anspruch 3 oder 4, wobei der Shift-Operator (12, 13) zwei Polarisationsgitter aufweist, wobei die Ausrichtung des molekularen Direktors des Flüssigkristallwerkstoffs in den zwei Polarisationsgittern periodisch entlang zugehöriger Richtungen definiert ist, die in einer Ebene *(x, y)* orthogonal zur Referenzachse *(z)* zueinander orthogonal sind.

6. Vorrichtung gemäß einem der vorangehenden Ansprüche, aufweisend eine die Reihe von Entwicklungsabschnitten (10) tragende Stützstruktur (15), wobei der Shift-Operator (12, 13) zur Positionseinstellung entlang einer Richtung orthogonal zur Referenzachse *(z)* an der Stützstruktur (15) angebracht ist, um die Wirkung einer äußeren Kraft auf den Quantum Walk zu simulieren.

7. Vorrichtung gemäß einem der vorangehenden Ansprüche, aufweisend mindestens ein zwischen der Reihe von Entwicklungsabschnitten (10) und dem optischen Sensor (30) angeordnetes fokussierendes optisches Element (20), wobei der optische Sensor (30) in einem Fokus des fokussierenden optischen Elements (20) angeordnet ist.

**Revendications**

1. Appareil de simulation photonique bidimensionnelle à partir d'un faisceau de rayonnement (B), comprenant une série d'étages d'évolution (10) agencés consécutivement le long d'un axe de référence (z) et configurés pour être successivement croisés par le faisceau de rayonnement (B), chaque étage d'évolution (10) comprenant

i) un opérateur unitaire (11) consistant en au moins un élément optique configuré pour transformer un état de polarisation du faisceau de rayonnement (B) entrant en une combinaison d'un état polarisé circulaire droit $|R\rangle$ et d'un état polarisé circulaire gauche $|L\rangle$, et
ii) un opérateur de décalage (12, 13) consistant en au moins un élément optique configuré pour décaler de manière discrète le moment transversal $\mathbf{k}_t$ du faisceau de rayonnement entrant (B), le long d'au moins une direction $(k_x, k_y)$ dans un espace de Fourier bidimensionnel associé à un plan réel *(x, y)* orthogonal à l'axe de référence (z),

un capteur optique (30) configuré pour détecter une grille de points générée par le faisceau de rayonnement (B) lors de l'application desdits étages d'évolution (10), le motif d'intensité de la grille de points étant indicatif d'une distribution de probabilité associée à une marche quantique.

2. Appareil selon la revendication 1, dans lequel l'opérateur unitaire (11) comprend au moins une plaque de biréfringence accordable comportant un matériau à cristaux liquides, l'agencement du directeur moléculaire du matériau étant uniforme dans un plan (x, y) orthogonal à l'axe de référence (z).

3. Appareil selon la revendication 1 ou 2, dans lequel l'opérateur de décalage (12, 13) comprend au moins un élément de phase Pancharatnam-Berry structuré comme un réseau de polarisation comportant un matériau à cristaux liquides, l'agencement du directeur moléculaire du matériau étant défini périodiquement le long d'une direction dans un plan (x, y) orthogonal à l'axe de référence (z).

4. Appareil selon la revendication 3, dans lequel l'agencement du directeur moléculaire du matériau du réseau de polarisation est défini par la relation

$$\alpha(\zeta) = \frac{\pi}{\Lambda}\zeta + \alpha_0,$$

où $\zeta$ = x ou y, $\alpha(\zeta)$, défini modulo $\pi$, est l'angle entre le directeur moléculaire du matériau du réseau de polarisation et l'un des axes de coordonnées du plan (x, y) perpendiculaire à l'axe de référence (z), $\alpha_0$ est l'angle résiduel à $\zeta$ = 0, et $\Lambda$ est la périodicité spatiale de l'angle.

5. Appareil selon la revendication 3 ou 4, dans lequel l'opérateur de décalage (12, 13) comprend deux réseaux de polarisation, l'agencement du directeur moléculaire du matériau à cristaux liquides dans les deux réseaux de polarisation étant défini périodiquement le long de directions respectives orthogonales l'une à l'autre dans un plan (x, y) orthogonal à l'axe de référence (z).

6. Appareil selon l'une quelconque des revendications précédentes, comprenant une structure de support (15) portant la série d'étages d'évolution (10), l'opérateur de décalage (12, 13) étant monté sur la structure de support (15) pour un ajustement en position le long d'une direction orthogonale à l'axe de référence (z) pour simuler l'action d'une force externe sur la marche quantique.

7. Appareil selon l'une quelconque des revendications précédentes, comprenant au moins un élément optique de focalisation (20) interposé entre la série d'étages d'évolution (10) et le capteur optique (30), le capteur optique (30) étant agencé au niveau d'un point focal de l'élément optique de focalisation (20).

FIG.1

FIG.2

16

FIG.3

EP 3 572 865 B1

FIG.4

FIG.5

FIG.6

FIG.7

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Quantum walks and wavepacket dynamics on a lattice with twisted photons. *SCIENCE,* 27 March 2015, vol. 1 (2
- **KITAGAWA, T. et al.** Observation of topologically protected bound states in photonic quantum walks. *Nature Communications,* 2012, vol. 3, 882
- **BROOME, M. A. et al.** Discrete Single-Photon Quantum Walks with Tunable Decoherence. *Physical Review Letters,* 2010, vol. 104, 153602
- **PERUZZO, A. et al.** Quantum Walks of Correlated Photons. *Science,* 2010, vol. 329, 1500
- **SANSONI, L. et al.** Two-Particle Bosonic-Fermionic Quantum Walk via Integrated Photonics. *Physical Review Letters,* 2012, vol. 108, 010502
- **POULIOS, K. et al.** Quantum Walks of Correlated Photon Pairs in Two-Dimensional Waveguide Arrays. *Physical Review Letters,* 2014, vol. 112, 143604
- **MARRUCCI, L. et al.** Optical Spin-to-Orbital Angular Momentum Conversion in Inhomogeneous Anisotropic Media. *Phys. Rev. Lett.,* 2006, vol. 96, 163905
- **PICCIRILLO, B. et al.** Photon spin-to-orbital angular momentum conversion via an electrically tunable q-plate. *Applied Physics Letters,* 2010, vol. 97, 4085
- **CHEN, H. et al.** Beam steering for virtual/augmented reality displays with a cycloidal diffractive waveplate. *Optics Express,* 2016, vol. 24, 7287
- **LEE, Y.-H. et al.** *Enhancing the resolution of a near-eye display with a Pancharatnam-Berry phase deflector,* 2017
- **SALEH, B. E. A. et al.** Fundamentals of photonics. Wiley-Interscience, 2009